# EUROPEAN PATENT APPLICATION

(11) **EP 4 806 857 A1**
(43) Date of publication of application: **16.09.2026**
(21) Application number: 26162137.9
(22) Date of filing: 03.03.2026
(51) Int. Cl.: C03C 3/064, C03C 3/066, C03C 8/08, C03C 8/14, C03C 17/34

(54) **SUBSTRATE FOR HOME APPLIANCES AND INDUCTION HEATING TYPE COOKTOP COMPRISING SAME**

(30) Priority: 10.03.2025 KR 20250030791
(71) Applicant: LG Electronics Inc., Yeongdeungpo-gu Seoul 07336 (KR)
(72) Inventor: KIM, Ju Hyeong, 07796 Seoul (KR); KIM, Juwon, 07796 Seoul (KR); HWANG, Jongwon, 07796 Seoul (KR); KIM, Taeho, 07796 Seoul (KR)
(74) Representative: Ter Meer Steinmeister & Partner

(57) **Abstract**

The present disclosure relates to a novel substrate for home appliances, which secures high thermal stability and anti-discoloration performance, and more specifically, the substrate for home appliances has one surface coated with a color-coated stack, wherein the color-coated stack includes a color/adhesive layer positioned in contact with a surface of the substrate, and a protective layer positioned above the color layer.

## Description

### BACKGROUND

### Technical Field

The present disclosure relates to a substrate for home appliances and an induction heating type cooktop including the same.

### Description of the Related Art

Various types of cooking appliances for heating food are used in homes or restaurants. Conventionally, gas ranges, which use gas as fuel, have been widely used, but recently, devices that heat heated objects, such as cooking vessels, using electricity instead of gas have become widespread.

Methods of heating heated objects using electricity are generally classified into resistance heating and induction heating. In the resistance heating, a heated object (e.g., a cooking vessel) is heated by transferring heat generated when current flows through a metallic resistor or a non-metallic heating element such as silicon carbide, to the heated object via radiation or conduction. In addition, in the induction heating, when a predetermined high-frequency power is applied to a coil, the magnetic field generated around the coil induces eddy currents in a metallic heated object, causing the heated object to be heated.

The induction heating is now widely used in cooktops.

Ceramic glass having excellent heat resistance is typically used for an upper portion of the cooktop.

The ceramic glass used in the cooktop needs to have sufficiently low transmittance to obscure underlying heating elements and to withstand localized high temperatures during cooking.

Conventional methods include coloring ceramic glass or applying single- or multi-layer coatings to colorless, transparent ceramic glass.

This coating can be applied in various ways. First, this coating can use a deposition method. However, the deposition method incurs high processing costs and limited color flexibility. In addition, coatings formed by the deposition method are thin and thus have low hiding power. Second, the coating can use an enamel coating. The enamel coating can be used at high temperatures, but a significant difference in thermal expansion coefficient from that of ceramic glass can lead to defects such as cracks or the like. Third, the coating can use a fluororesin coating. However, the fluororesin coating is restricted in use due to regulations regarding perfluorinated compounds. Fourth, the coating can use a silicon coating. Silicon materials offer excellent durability at high temperatures, but when the silicon coating is applied to a ceramic glass for a cooktop, the coating may be peeled off or may exhibit discoloration.

### SUMMARY OF THE DISCLOSURE

The present disclosure is directed to providing a novel substrate for home appliances, which secures freedom of color while reducing costs.

The present disclosure is also directed to providing a novel substrate for home appliances, which secures high thermal stability and anti-discoloration performance.

The present disclosure is also directed to providing a novel substrate for home appliances, which can secure long-term reliability even in high-temperature environments.

Objects of the present disclosure are not limited to the above object, and other objects and advantages of the present disclosure which are not mentioned can be understood by the following description and more clearly understood by various embodiments of the present disclosure. In addition, it will be able to be easily seen that the objects and advantages of the present disclosure may be achieved by devices and combinations thereof that are described in the claims.

According to the present disclosure, a substrate for home appliances has one surface coated with a color-coated stack including a color/adhesive layer and a protective layer. Accordingly, in the substrate for home appliances of the present disclosure, it is possible to secure the freedom of color while reducing costs. In addition, in the substrate for home appliances of the present disclosure, it is possible to achieve excellent thermal stability and anti-discoloration performance.

Specifically, the substrate for home appliances of the present disclosure has one surface coated with a color-coated stack, wherein the color-coated stack includes a color/adhesive layer positioned in contact with a surface of the substrate and a protective layer positioned above the color/adhesive layer.

Here, the color/adhesive layer may be formed of a color/adhesive layer paste coating solution including glass frit, an inorganic pigment, and an inorganic filler.

Preferably, the color/adhesive layer paste coating solution may include the glass frit in an amount of 5 wt% to 70 wt%, the inorganic pigment in an amount of 5 wt% to 70 wt%, and the inorganic filler in an amount of 10 wt% to 60 wt%.

In addition, the inorganic filler may preferably include Li(1-x)Al(1-x)Si(1+x)O (where x satisfies 0 ≤ x ≤ 0.42).

In addition, an induction heating type cooktop according to another embodiment of the present disclosure includes a working coil for heating a magnetic body and a heated thin-film coating for heating a non-magnetic body to heat both a magnetic body and a non-magnetic body.

The induction heating type cooktop according to the present disclosure includes a working coil and a heated thin-film coating that are disposed to overlap each other in a vertical direction, wherein the heated thin-film coating may have a stacked structure in which an adhesive layer and a heating layer are sequentially stacked and have at least one of magnetic and non-magnetic properties so that an eddy current is induced by the working coil, thereby enabling induction heating.

In addition, since a skin depth of the heated thin-film coating is deeper than a thickness of the heated thin-film coating, when a heated object is heated, a magnetic field generated by the working coil may be transmitted to the heated object through a thin film, thereby inducing an eddy current in the heated object.

In addition, when the heated object formed of a non-magnetic body, the magnetic field generated by the working coil may induce an eddy current in the heated thin-film coating.

Accordingly, the heated object may directly or indirectly heat using the same heat source.

In addition, the induction heating type cooktop of the present disclosure may have a top plate to which the substrate for home appliances is applied. Accordingly, the cooktop of the present disclosure may have excellent durability and reliability.

According to the present disclosure, the novel substrate for home appliances, which secures freedom of color while reducing costs, can be provided.

In addition, according to the present disclosure, the novel substrate for home appliances, which secures high thermal stability and anti-discoloration performance, can be provided.

In addition, according to the present disclosure, the novel substrate for home appliances, which can secure long-term reliability even in high-temperature environments, can be provided.

In addition, the induction heating type cooktop according to the present disclosure can heat both the magnetic and non-magnetic bodies. In addition, the induction heating type cooktop according to the present disclosure can heat the corresponding heated object regardless of the arrangement or type of the heated object. Accordingly, the user can place the heated object on any heating area on the top plate and heat the heated object without determining whether the heated object is a magnetic or non-magnetic body.

In addition, the induction heating type cooktop according to the present disclosure can directly and indirectly heat the heated object using the same heat source, eliminating the need for a separate heating plate or radiant heater. Accordingly, according to the present disclosure, it is possible to not only improve heating efficiency, but also reduce material costs.

Specific effects together with the above effects are described together with a description of the following detailed matters for carrying out the disclosure.

### BRIEF DESCRIPTION OF THE DRAWINGS

FIG. 1 is a cross-sectional view of a substrate for home appliances according to one embodiment of the present disclosure.
FIG. 2 is a view for describing an induction heating type cooktop according to one embodiment of the present disclosure.
FIG. 3 is a view for describing components provided within a case of the induction heating type cooktop illustrated in FIG. 2.
FIGS. 4 and 5 are views illustrating examples of a heated thin-film coating according to the present disclosure.
FIGS. 6 and 7 are views for describing a relationship between a thickness and skin depth of a heating module.
FIGS. 8 and 9 are views for describing changes in impedance between the heated thin-film coating and a heated object depending on the type of the heated object.
FIG. 10 is a view for describing an induction heating type cooktop according to another embodiment of the present disclosure.
FIG. 11 is a view for describing components provided within a case of the induction heating type cooktop illustrated in FIG. 10.
FIG. 12 is a view illustrating the arrangement of a heated object on the induction heating type cooktop illustrated in FIG. 10.
FIG. 13 is a graph evaluating thermal stability in an example and a comparative example.

### DETAILED DESCRIPTION OF THE DISCLOSURE

The above-described objects, features, and advantages will be described below in detail with reference to the accompanying drawings, and thus those skilled in the art to which the present disclosure pertains will be able to easily carry out the technical spirit of the present disclosure. In describing the present disclosure, when it is determined that a detailed description of the known technology related to the present disclosure may unnecessarily obscure the gist of the present disclosure, a detailed description thereof will be omitted. Hereinafter, exemplary embodiments according to the present disclosure will be described in detail with reference to the accompanying drawings. In the drawings, the same reference numerals are used to denote the same or similar components.

Hereinafter, the arrangement of an arbitrary component on an "upper portion (or lower portion)" of a component or "above (or under)" the component may not only mean that the arbitrary component is disposed in contact with an upper surface (or a lower surface) of the component, but also mean that other components may be interposed between the component and the arbitrary component disposed above (or under) the component.

In addition, when a certain component is described as being "connected," "coupled," or "joined" to the other component, the components may be directly connected or joined, but it should be understood that another component may be "interposed" between the components, or the components may be "connected," "coupled," or "joined" through another component.

Hereinafter, a substrate for home appliances according to one embodiment of the present disclosure will be described.

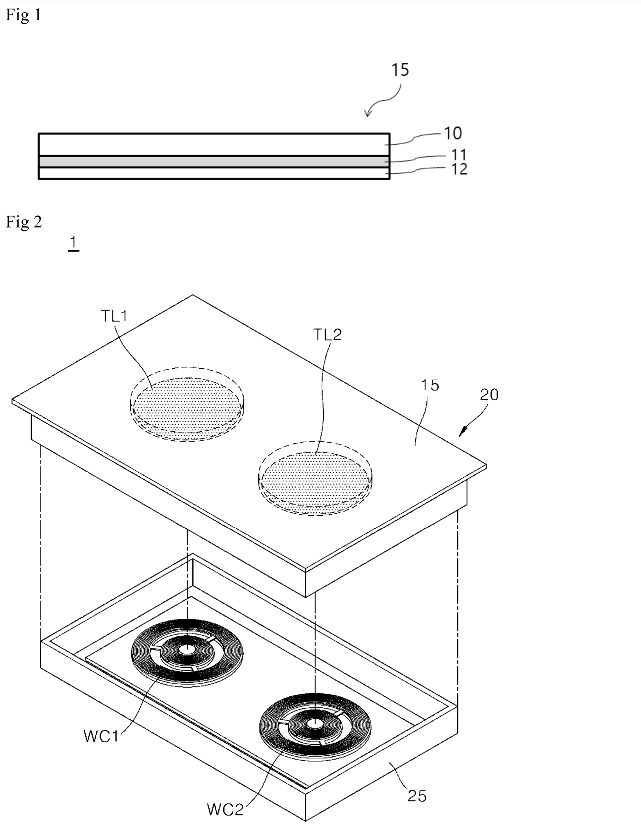

FIG. 1 is a cross-sectional view of a substrate for home appliances according to one embodiment of the present disclosure.

First, referring to FIG. 1, a substrate 15 for home appliances according to one embodiment of the present disclosure refers to a substrate 10 having color-coated stacks 11 and 12 coated on one surface. Here, the color-coated stack includes a color/adhesive layer 11 in contact with a surface of the substrate 10 and a protective layer 12 positioned above the color/adhesive layer 11.

The substrate 15 for home appliances of the present disclosure may include the color-coated stacks, thereby exhibiting various colors and excellent reliability even when exposed to high temperatures for a long time.

First, any known substrate used for home appliances may be used as the substrate, but most preferably, a substrate formed of ceramic glass is used.

The color-coated stack includes the color/adhesive layer 11. The color/adhesive layer 11 may have adhesion that allows it to adhere to the surface of the substrate and impart color to the substrate.

The color/adhesive layer 11 may be formed using a color/adhesive layer paste coating solution containing glass frit, an inorganic pigment, and an inorganic filler.

Here, the color/adhesive layer paste coating solution may include the glass frit in an amount of 5 wt% to 70 wt%, the inorganic pigment in an amount of 5 wt% to 70 wt%, and the inorganic filler in an amount of 10 wt% to 60 wt%.

In this case, the color/adhesive layer paste coating solution may additionally include a solvent and a binder to improve coating workability.

The solvent may be one or more of xylene, ethylbenzene, toluene, benzene, isopropyl alcohol (IPA), and butyl carbitol acetate (BCA).

In addition, the binder may be cellulose or the like.

The glass frit is used to improve the adhesion and thermal stability of the coating. The glass frit may be any glass frit known in the art, but preferably includes a glass frit having a thermal expansion coefficient of 50 to 110x10⁻⁷/°C and a softening point of 300 °C to 600 °C.

The glass frit may include a silicate-based glass composition, a phosphate-based glass composition, etc., and as specific examples, the glass frit may include Bi₂O₃, B₂O₃, SiO₂, BaO, ZrO₂, or P₂O₅.

The color/adhesive layer paste coating solution may include the glass frit in an amount of 5 wt% to 70 wt%.

When the glass frit is less than 5 wt%, the color/adhesive layer may not have sufficient adhesion to adhere to the substrate, and thermal stability can be degraded. In addition, when the glass frit exceeds 70 wt%, cracks can occur in the coating.

The inorganic pigment is used to achieve color development of the substrate. The inorganic pigment may include one or more oxides of one selected from Fe, Al, Mn, Ni, Ti, Mo, Si, Mg, Co, Sn, and Zr.

Preferably, the inorganic pigment is used in an amount of 5 wt% to 70 wt%. When the inorganic pigment is less than 5 wt%, color development can be insufficient and the thermal stability of the coating can be degraded. In addition, when the inorganic pigment exceeds 70 wt%, the formability and adhesion of the coating can be degraded, and color adjustment can be difficult.

The inorganic filler is used to improve the physical properties of the color/adhesive layer. The inorganic filler may include one or more of various known inorganic materials.

As a specific example, the inorganic filler may include at least one of (Mg,Fe)₂Al₄Si₅O₁₈, LiAl(SiO₃)₂, Li(1-x)Al(1-x)Si(1+x)O₄, Be₃Al₂Si₆O1₈, NaZr₂(PO₄)₃, CaZr₄(PO₄)₆, Nb₂O₅, Al₂TiO₅, Zr₂P₂O₉, TiO₂, Fe₂O₃, and Al₂O₃.

Preferably, the inorganic filler may include Li(1-x)Al(1-x)Si(1+x)O₄ (where x satisfies 0≤x≤0.42), which can improve all physical properties of the color/adhesive layer, such as adhesion, thermal stability, and transmittance. More preferably, x satisfies 0.1≤x≤0.42.

Since the color/adhesive layer of the present disclosure includes Li(1-x)Al(1-x)Si(1+x)O₄ as an inorganic filler, the color/adhesive layer exhibits excellent adhesion, thermal stability, and transmittance over a wide range of thicknesses.

Here, when x exceeds 0.42, a crystalline phase may be formed in the color/adhesive layer, thereby reducing thermal stability.

The inorganic filler including Li(1-x)Al(1-x)Si(1+x)O₄ may be manufactured by preparing raw materials according to their composition and ball milling, thoroughly mixing, and then synthesizing them at 1000 °C to 1800 °C for 1 to 96 hours under atmospheric pressure.

One or more inorganic fillers may be used depending on the intended use, and the content preferably ranges from 10 wt% to 60 wt%. When the inorganic filler is present at less than 10 wt%, cracks can occur in the coating. When the inorganic filler exceeds 60 wt%, the adhesion of the coating can be degraded and the color can be affected.

Next, the color-coated stack includes a protective layer 12. The protective layer 12 has a function of protecting the color/adhesive layer 11. Specifically, the protective layer 12 prevents scratches on the stack and minimizes oxygen exposure. The protective layer 12 is positioned above the color/adhesive layer 11.

The protective layer 12 may be formed using a protective layer paste coating solution containing an inorganic material. The inorganic material may include an inorganic coating based on glass frit. Specifically, the inorganic material may be at least one of V₂O₅, P₂O₅, B₂O₃, Bi₂O₃, ZnO, SiO₃, B₂O₃, Al₂O₃, Al(OH)₃, TiO₂, CaCO₃, CaO, Ca(OH)₂, BaSO₄, ZnO, glass fiber, and talc.

In this case, the protective layer paste coating solution may additionally include a solvent and a binder to improve coating workability.

The solvent may be one or more of xylene, ethylbenzene, toluene, benzene, IPA, and BCA.

In addition, the binder may be cellulose or the like.

A thickness of the color/adhesive layer 11 may range from 5 µm to 150 µm, and preferably 30 µm to 120 µm. When the thickness of the color/adhesive layer 11 is less than 5 µm, color may not be developed, and hiding power may be limited. In addition, when the thickness of the color/adhesive layer 11 exceeds 150 µm, cracks can occur.

A thickness of the protective layer 12 may range from 0.1 to 50 µm, preferably from 10 to 40 µm. When the thickness of the protective layer 12 is less than 0.1 µm, the function to protect the color/adhesive layer 11 from contaminants can be degraded, and when the thickness of the protective layer 12 exceeds 50 µm, cracks can occur.

The color-coated stack may preferably be formed using a screen printing method. The color/adhesive layer 11 may be formed by coating one surface of the substrate 10 with the color/adhesive layer paste coating solution. In this case, the color/adhesive layer 11 may be formed through a drying process at about 100 °C to 250 °C for 1 to 30 minutes and then a firing process at 550 °C to 850 °C for 3 to 30 minutes. Thereafter, the protective layer paste coating solution may be coated on the color/adhesive layer 11 to form the protective layer 12. The protective layer 12 may be formed in the same manner as the color/adhesive layer 11.

Next, an induction heating type cooktop according to one embodiment of the present disclosure will be described.

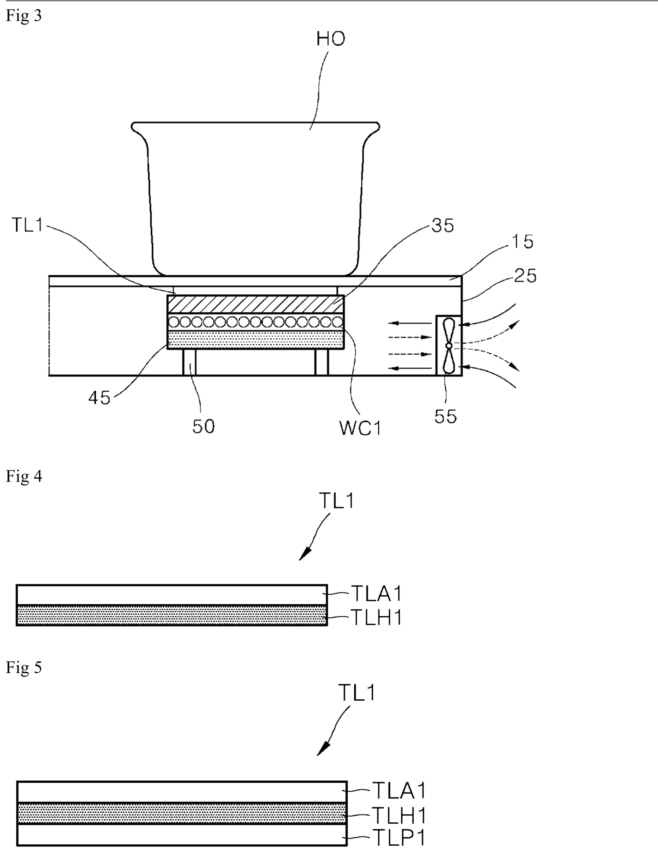

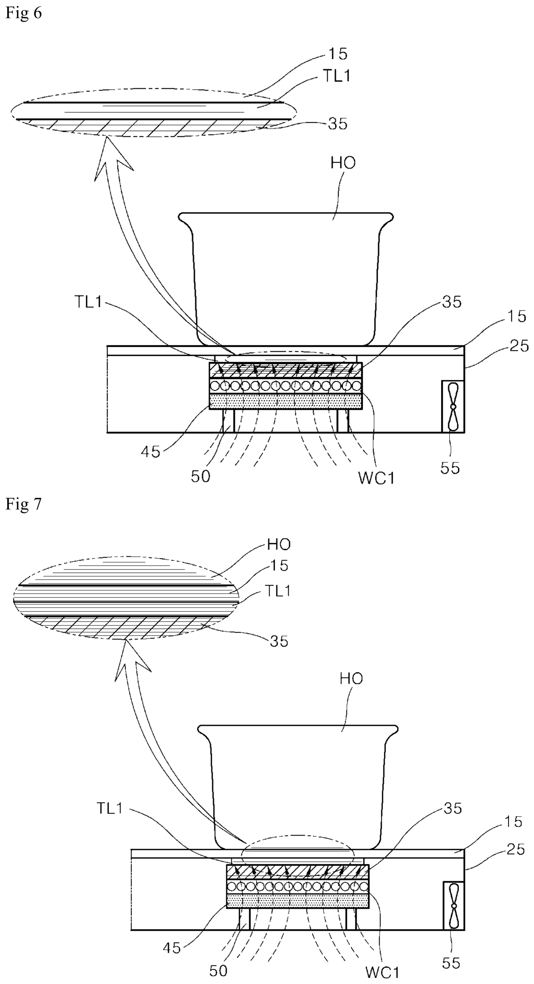

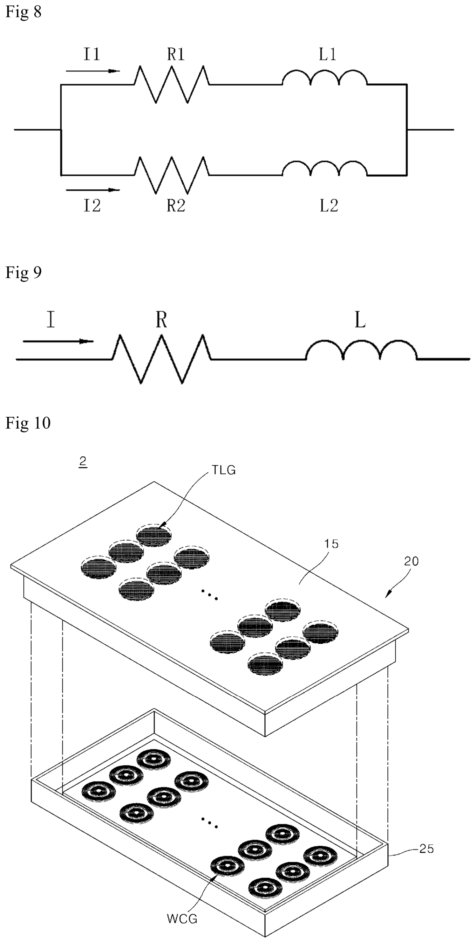

FIG. 2 is a view for describing an induction heating type cooktop according to one embodiment of the present disclosure. FIG. 3 is a view for describing components provided within a case of the induction heating type cooktop illustrated in FIG. 2. FIGS. 4 and 5 are views illustrating examples of a heated thin-film coating according to the present disclosure. FIGS. 6 and 7 are views for describing skin depth characteristics according to the relative magnetic permeability of the thin film. FIGS. 8 and 9 are views for describing changes in impedance between a thin film and a heated object depending on the type of the heated object.

First, referring to FIG. 2, an induction heating type cooktop 1 according to one embodiment of the present disclosure may include a case 25, a cover plate 20, working coils WC1 and WC2 (i.e., first and second working coils), and heated thin-film coatings TL1 and TL2 (i.e., first and second heated thin-film coatings).

The working coils WC1 and WC2 may be installed in the case 25.

For reference, in addition to the working coils WCl and WC2, the case 25 may be provided with various devices related to driving the working coils (e.g., a power supply unit for supplying AC power, a rectifier unit for rectifying the AC power of the power supply unit into DC power, an inverter unit for converting the DC power rectified by the rectifier unit into a resonant current through a switching operation and provides the resonant current to the working coils, a control module for controlling the operations of various devices in the induction heating type cooktop 1 (the control module includes an inverter control module for controlling the switching operation of the inverter unit and an input interface control module for controlling the input interface), a relay or semiconductor switch for turning the working coils on or off, etc.), but the detailed descriptions thereof will be omitted.

The cover plate 20 may be coupled to an upper end of the case 25 and may have a top plate 15 on which a heated object (not illustrated) is disposed on an upper surface thereof. Here, as the top plate 15, the substrate for home appliances is used. In this case, the color-coated stack may be coated on a surface, which may be positioned on a lower side of the top plate 15.

Specifically, the cover plate 20 may include the top plate 15 on which a heated object, such as a cooking vessel, is placed.

Here, the top plate 15 may be formed of, for example, a glass material (e.g., ceramic glass).

In addition, the top plate 15 may include an input interface (not illustrated) for receiving input from a user and transmitting the input to the control module. Of course, the input interface may be provided at a position other than the top plate 15.

For reference, the input interface is a module for inputting a desired heating intensity of the user, the operating time of the induction heating type cooktop 1, etc., and may be implemented in various ways, such as with physical buttons, a touch panel, etc. In addition, the input interface may include, for example, a power button, a lock button, power level adjustment buttons (+, -), timer adjustment buttons (+, -), a charging mode button, etc. In addition, the input interface may transmit user input to the control module (not illustrated) for an input interface, which may transmit the input to the inverter control module (not illustrated). In addition, since the inverter control module may control the operation of various devices (e.g., working coils) based on the input (i.e., user input) received from the input interface control module, the detailed descriptions thereof will be omitted.

Meanwhile, the top plate 15 may visually display the operation state of the working coils (e.g., the first and second working coils WC1 and WC2) and the heating intensity (i.e., the heating power) in a burner shape. The burner shape may be indicated by an indicator (not illustrated) composed of a plurality of light-emitting elements (e.g., LEDs) provided within the case 25.

The first and second working coils WC1 and WC2 may be installed within the case 25 to heat the heated object.

Specifically, the operation of the first and second working coils WC1 and WC2 may be controlled by the inverter control module, and when the heated object is disposed on the top plate 15, the heated object may be driven by the inverter control module.

In addition, the first and second working coils WC1 and WC2 may directly heat a magnetic heated object (i.e., a magnetic body) and indirectly heat a non-magnetic heated object (i.e., a non-magnetic body) via the first and second heated thin-film coatings TL1 and TL2 to be described below.

In addition, the first and second working coils WC1 and WC2 may heat the heated object by induction heating and may be provided to overlap the first and second heated thin-film coatings TL1 and TL2 in a vertical direction.

For reference, FIG. 2 illustrates that two working coils WC1 and WC2 are installed in the case 25, but various embodiments of the present specification are not limited thereto. That is, one or three or more working coils may be installed in the case 25, but for convenience of description, in one embodiment of the present disclosure, an example in which two working coils WC1 and WC2 are installed in the case 25 will be described.

The heated thin-film coating may include the first and second heated thin-film coatings TL1 and TL2. The heated thin-film coating is provided on any one surface of the top plate or any one surface of the thermal insulation material. That is, the heated thin-film coating may be formed on an upper or lower surface of the top plate or on an upper or lower surface of the thermal insulation material.

For example, the first and second heated thin-film coatings TL1 and TL2 may be provided to be spaced apart from each other on the lower surface of the top plate 15.

In addition, the first and second heated thin-film coatings TL1 and TL2 may be provided to overlap the first and second working coils WC1 and WC2 in the vertical direction.

In addition, the first and second heated thin-film coatings TL1 and TL2 may have at least one of magnetic and non-magnetic properties (i.e., magnetic, non-magnetic, or both magnetic and non-magnetic properties).

As illustrated in FIG. 4, the heated thin-film coating TL1 according to the present disclosure has a stacked structure in which an adhesive layer TLA1 and a heating layer TLH1 are sequentially stacked.

The adhesive layer TLA1 adheres the top plate or the thermal insulation material to the heating layer

TLH1. In addition, the adhesive layer TLA1 protects the heating layer TLH1 from ion dissolution from the top plate caused by long-term high-temperature application and prevents performance degradation of the heating layer TLH1.

In order to achieve the above function, the adhesive layer TLA1 may include one or more of inorganic materials and metal oxides. As a specific example, the adhesive layer TLA1 may contain a transition metal, such as Ti, Cr, Fe, Ni, Cu, etc., or a metal oxide, such as Al₂O₃, SiO₂, etc.

Preferably, the adhesive layer TLA1 may be formed by coating an adhesive layer paste coating solution containing one or more of inorganic materials and metal oxides. More specifically, the adhesive layer paste coating solution may contain one or more of inorganic materials and metal oxides in an amount of 60 wt% to 85 wt%, a binder resin in an amount of 5 wt% to 25 wt%, a solvent in an amount of 5 wt% to 25 wt%, and an inorganic filler in an amount of 0.5 wt% to 5 wt%. In addition, the adhesive layer paste coating solution may further contain additives such as a leveling agent, an anti-foaming agent, and a dispersing agent, as needed.

The one or more of inorganic materials and metal oxides may be one or more of V₂O₅, P₂O₅, PbO, B₂O₃, Bi₂O₃, ZnO, SiO₃, B₂O₃, Al₂O₃, BaO, MoO₃, TeO₂, Ta₂O₅, Nb₂O₅, and CaO. The inorganic materials and metal oxides are used in particle form, and the shapes of all particles, such as spherical, plate, and amorphous shapes, may be used. Softening points of the materials may fall within the range of 400 °C to 800 °C, and a crystallization temperature (Tc) may range from 450 °C to 850 °C. The sizes of the particles may range from 1 µm to 5 µm. When the one or more of inorganic materials and metal oxides are contained in an amount less than 60 wt%, the protective performance of the heating layer can be degraded. On the other hand, when the one or more of inorganic materials and metal oxides exceed 85 wt%, work performance can be degraded and cracks can occur.

In addition, the binder resin binds one or more of inorganic materials and metal oxides to form a three-dimensional chain structure. In addition, the binder resin influences the formation of a uniform coating film and impacts durability, chemical resistance, adhesion to the substrate, etc. When the binder is not completely thermally decomposed during the firing process, the binder may form pores and remain within the electrode, increasing the resistivity of the thin film. The binder resin preferably has a thermal decomposition temperature of 100 °C to 300 °C and a molecular weight of 2,000 to 2,000,000, such as polyurethane, polyester, polyacrylic, polycellulose, etc. When the content of the binder resin is less than 5 wt%, viscosity may be low, preventing the formation of a uniform coating film and increasing resistivity, and when the content exceeds 25 wt%, coating workability can be degraded.

The solvent can improve the coatability and workability of the coating solution. The solvent preferably has a thermal decomposition temperature of 50 °C to 200 °C and may include one or more selected from the group consisting of butyl cellosolve, ethylene glycol monobutyl ether acetate, ethyl carbitol, ethyl carbitol acetate, butyl carbitol, ethoxy ethyl acetate, butyl acetate, propylene glycol monoethyl ether, ethyl alcohol, butyl alcohol, etc. As described above, the content of the solvent preferably ranges from 5 wt% to 25 wt%.

The inorganic filler is an additive used to improve the physical properties of the coating. The inorganic filler may be Al₂O₃, Al(OH)₃, TiO₂, CaCo₃, CaO, Ca(OH)₂, SiO₂, BaSO₄, ZnO, glass fiber, talc, etc., and one or more thereof may be used depending on the intended use. The inorganic filler may have a size of 1 µm to 5 µm, and the content thereof preferably ranges from 0.5 wt% to 5 wt%.

In addition, the additives may be leveling agents, antifoaming agents, dispersants, and fluidity regulators to improve the dispersibility, storage stability, and coating performance of the coating, preferably, silicone-based (polyether hydroxy polymethylsilane, polyether dimethylpolysiloxane, polymethylalkylsiloxane, polyether polymethylalkylsiloxane, polyester hydroxy polymethylsiloxane, polyether polymethylsiloxane), non-silicone-based (non-ionic polyacrylic, ionic polyacrylic, polyacrylate, alcohol alcohol silate, acrylate), alcohol-based (ethanol, butanol) materials, etc. may be used. Preferably, the additives in an amount of 0.05 wt% to 5 wt% may be added to the coating solution.

The thickness of the adhesive layer TLA1 is not particularly limited, but is preferably formed to a thickness of 0.01 µm to 10 µm. When the thickness of the adhesive layer TLA1 is less than 0.01 µm, adhesion between the heating layer and the top plate can be degraded, and the protective performance of the heating layer can be insufficient. On the other hand, when the thickness of the adhesive layer TLA1 exceeds 10 µm, the induction heating function of the heated thin-film coating TLA1 can deteriorate.

Next, the heating layer TLH1 enable the cooktop according to the present disclosure to selectively heat the heated object.

The heating layer TLH1 may include one or more of metals and metal alloys to achieve the function. As a specific example, the heating layer TLH1 may contain one or two or more of Sn, Co, Cr, Fe, Ni, Al, Cu, Ag, and Au.

Preferably, the heating layer TLH1 may be formed by coating a heating layer paste coating solution containing one or more of metals and metal alloys. More specifically, the heating layer paste coating solution may include one or more of metals and metal alloys in an amount of 40 wt% to 90 wt%, a binder resin in an amount of 2 wt% to 25 wt%, a solvent in an amount of 5 wt% to 25 wt%, an inorganic material in an amount of 0.5 wt% to 5 wt%, and an inorganic filler in an amount of 0.5 wt% to 5 wt%.

The one or more of metals and metal alloys may include one or more of Pd, Au, Pt, W, Ni, RuO₂, Ag, and Cu and may be used in the form of particles. The particles may have spherical, plate, and amorphous shapes, and a shape that can increase a contact area therebetween is preferably selected. The sizes of the particles preferably range from 0.5 µm to 20 µm, and the particles may be combined singly or in groups of two to four to increase the contact density between the particles. When the one or more of metals and metal alloys are present in an amount less than 40 wt%, the heating performance of the heating layer can deteriorate, and when they exceed 90 wt%, film flatness can deteriorate, clumping can occur, and sinterability can deteriorate during the coating process.

In addition, the binder resin forms a three-dimensional chain structure by bonding the one or more of metals and metal alloys. In addition, the binder resin influences the formation of a uniform coating film and impacts durability, chemical resistance, adhesion to the substrate, etc. When the binder is not completely thermally decomposed during the firing process, the binder may form pores and remain within the electrode, increasing the resistivity of the thin film. The binder resin preferably has a thermal decomposition temperature of 100 °C to 300 °C and a molecular weight of 2,000 to 2,000,000, such as polyurethane, polyester, polyacrylic, polycellulose, etc. When the content of the binder resin is less than 2 wt%, viscosity may be low, preventing the formation of a uniform coating film and increasing resistivity, and when the content exceeds 25 wt%, coating workability can be degraded.

The solvent can improve the coatability and workability of the coating solution. The solvent preferably has a thermal decomposition temperature of 50 °C to 200 °C and may include one or more selected from the group consisting of butyl cellosolve, ethylene glycol monobutyl ether acetate, ethyl carbitol, ethyl carbitol acetate, butyl carbitol, ethoxy ethyl acetate, butyl acetate, propylene glycol monoethyl ether, ethyl alcohol, butyl alcohol, etc. As described above, the content of the solvent preferably ranges from 5 wt% to 25 wt%.

The inorganic material may be used to improve the adhesion of the heating layer. The inorganic material may be one or more of V₂O₅, P₂O₅, PbO, B₂O₃, Bi₂O₃, ZnO, SiO₂, B₂O₃, Al₂O₃, BaO, MoO₃, TeO₂, Ta₂O₅, Nb₂O₅, and CaO and may be used in the form of particles. The particles may have spherical, plate, and amorphous shapes and may be used singly or in combinations of two to six types. The softening points of the particles preferably range from 400 °C to 700 °C, and the crystallization temperature (Tc) preferably ranges from 450 °C to 750 °C. The inorganic filler may have a size of 1 µm to 5 µm, and the content thereof preferably ranges from 0.1 wt% to 5 wt%.

The inorganic filler is an additive used to improve the physical properties of the coating. The inorganic filler may be Al₂O₃, Al(OH)₃, TiO₂, CaCo₃, CaO, Ca(OH)₂, SiO₂, BaSO₄, ZnO, glass fiber, talc, etc., and one or more thereof may be used depending on the intended use. The inorganic filler may have a size of 1 µm to 5 µm, and the content thereof preferably ranges from 0.5 wt% to 5 wt%.

In addition, the additives may be leveling agents, antifoaming agents, dispersants, and fluidity regulators to improve the dispersibility, storage stability, and coating performance of the coating, preferably, silicone-based (polyether hydroxy polymethylsilane, polyether dimethylpolysiloxane, polymethylalkylsiloxane, polyether polymethylalkylsiloxane, polyester hydroxy polymethylsiloxane, polyether polymethylsiloxane), non-silicone-based (non-ionic polyacrylic, ionic polyacrylic, polyacrylate, alcohol alcohol silate, acrylate), alcohol-based (ethanol, butanol) materials, etc. may be used. Preferably, the additives in an amount of 0.05 wt% to 5 wt% may be added to the coating solution.

The thickness of the heating layer TLH1 is not particularly limited, but is preferably formed to a thickness of 1 µm to 60 µm. When the thickness of the heating layer TLH1 is less than 1 µm, the selective heating function can be degraded. On the other hand, when the thickness of the heating layer TLH1 exceeds 60 µm, heating performance can be degraded.

In addition, the heating layer TLH1 may, of course, be formed of one or more layers (not illustrated) as needed.

Next, referring to FIG. 5, the heated thin-film coating TL1 according to the present disclosure may further include a protective layer TLP1. As described above, the heated thin-film coating TL1 according to the present disclosure may be formed on any one surface of the top plate or the thermal insulation material. In particular, when the heated thin-film coating TL1 according to the present disclosure is formed on an upper surface of the top plate, the heated thin-film coating TLA1 preferably, further include the protective layer TLP1 to protect the heating layer from the heated object. Accordingly, the protective layer TLP1 is formed on one surface of the heating layer TLH1 (surface opposite to the surface on which the adhesive layer TLA1 is formed).

The protective layer TLP1 may include one or more of inorganic materials and metal oxides to protect the heating layer TLH1. As a specific example, the protective layer may include one or two or more of SiO₂, Al₂O₃, CeO, and MgO.

The protective layer TLP1 may be formed from the same paste coating solution as the adhesive layer paste coating solution.

A thickness of the protective layer TLP1 is not particularly limited, but is preferably formed to a thickness of 1 µm to 60 µm. When the thickness of the protective layer TLP1 is less than 1 µm, the protective performance of the heating layer can be insufficient. On the other hand, when the thickness of the protective layer TLP1 exceeds 60 µm, the induction heating function of the heated thin-film coating TLA1 can be degraded.

The heated thin-film coating TL1 according to the present disclosure is preferably formed by paste coating. The coating method is not particularly limited in the present disclosure. The present disclosure may use any of gravure printing, spray printing, and screen printing.

When the heated thin-film coating TL1 is formed using paste coating, a thin film having an entirely uniform density can be obtained. Accordingly, the heated thin-film coating TL1 formed by paste coating exhibits superior basic performance, such as heating performance, compared to thin films formed by other methods.

The paste coating process according to the present disclosure may be performed in the order of washing, coating, drying, sintering, and cooling. An adhesive layer may first be formed on the surface of the object, such as the top plate and the thermal insulation material, followed by the heating layer. In the present disclosure, sintering is preferably performed within a range of 400 °C to 900 °C to secure the conductivity of the heated thin-film coating.

In addition, the paste coating solutions for the components constituting the heated thin-film coating TL1 are as described above.

The first and second heated thin-film coatings TL1 and TL2 are formed to a thickness capable of being induction-heated by the working coils, and the detailed descriptions thereof will be described below.

In addition, a diameter (i.e., size) of each of the first and second heated thin-film coatings TL1 and TL2 may be smaller than a diameter of the top plate 15.

Subsequently, referring to FIG. 3, the induction heating type cooktop 1 according to one embodiment of the present disclosure may further include a thermal insulation material 35, a shield plate 45, a support member 50, and a cooling fan 55.

For reference, since the components disposed around the first working coil WC1 and the components disposed around the second working coil WC2 (see FIG. 1) are the same, for convenience of description, the following description will focus on the components (the first heated thin-film coating TL1, the thermal insulation material 35, the shield plate 45, the support member 50, and the cooling fan 55) around the first working coil WC1.

The thermal insulation material 35 may be provided between the first heated thin-film coating TL1 and the first working coil WC1.

The thermal insulation material 35 can block heat generated when the first heated thin-film coating TL1 or a heated object HO is heated by the operation of the first working coil WC1 from being transferred to the first working coil WC1.

That is, when the first heated thin-film coating TL1 or the heated object HO is heated by the electromagnetic induction of the first working coil WC1, the heat of the first heated thin-film coating TL1 or the heated object HO may be transferred to the top plate 15, and the heat of the top plate 15 may be transferred back to the first working coil WC1, thereby damaging the first working coil WC1.

In this way, the thermal insulation material 35 can block the heat transferred to the first working coil WC1, thereby preventing the first working coil WC1 from being damaged by heat and further preventing the heating performance of the first working coil WC1 from being degraded.

For reference, although not an essential component, a spacer (not illustrated) may be installed between the first working coil WC1 and the thermal insulation material 35.

Specifically, the spacer may be inserted between the first working coil WC1 and the thermal insulation material 35 to prevent direct contact between the first working coil WC1 and the thermal insulation material 35. Accordingly, the spacer can block the heat generated when the first heated thin-film coating TL1 or the heated object HO is heated by the operation of the first working coil WC1 from being transferred to the first working coil WC1 through the thermal insulation material 35.

Since the spacer may partially share the role of the thermal insulation material 35, the thickness of the thermal insulation material 35 can be minimized, thereby minimizing a gap between the heated object HO and the first working coil WC1.

In addition, the spacer may be provided as a plurality of spacers, and the plurality of spacers may be spaced apart from each other between the first working coil WC1 and the thermal insulation material 35. Accordingly, air suctioned into the case 25 by the cooling fan 55 to be described below may be guided to the first working coil WC1 by the spacers.

That is, the spacer can improve the cooling efficiency of the first working coil WC1 by guiding the air suctioned into the case 25 by the cooling fan 55 to be appropriately transferred to the first working coil WC1.

The shield plate 45 may be mounted on a lower surface of the first working coil WC1 and can block a magnetic field generated downward during the operation of the first working coil WC1.

Specifically, the shield plate 45 can block the magnetic field generated downward when the first working coil WC1 is driven and may be supported upward by the support member 50.

The support member 50 may be installed between a lower surface of the shield plate 45 and a lower surface of the case 25 to support the shield plate 45 upward.

Specifically, the support member 50 may indirectly support the first working coil WC1, the thermal insulation material 35, and the first heated thin-film coating TL1 upward by supporting the shield plate 45 upward, thereby constantly maintaining the gap between the first working coil WC1 and the heated object HO.

For reference, the support member 50 may include, for example, an elastic body (e.g., a spring) for supporting the shield plate 45 upward, but is not limited thereto. In addition, the support member 50 is not an essential component and may be omitted from the induction heating type cooktop 1.

The cooling fan 55 may be installed inside the case 25 to cool the first working coil WC1.

Specifically, the operation of the cooling fan 55 may be controlled by the control module and installed on a sidewall of the case 25. Of course, the cooling fan 55 may be installed at a position other than the sidewall of the case 25, but for convenience of description, in one embodiment of the present disclosure, an example in which the cooling fan 55 is installed on the sidewall of the case 25 will be described.

In addition, as illustrated in FIG. 2, the cooling fan 55 may suction air outside the case 25 and transfer the air to the first working coil WC1, or suction air (particularly, heat) inside the case 25 and discharge the air to the outside of the case 25.

Accordingly, it is possible to achieve efficient cooling of the components (particularly, the first working coil WC1) inside the case.

In addition, as described above, the air outside the case 25 transferred to the first working coil WC1 by the cooling fan 55 may be guided to the first working coil WC1 by the spacer. Accordingly, direct and efficient cooling of the first working coil WC1 may be achieved, thereby improving the durability (i.e., improving durability by preventing heat damage) of the first working coil WC1.

In this way, the induction heating type cooktop 1 according to one embodiment of the present disclosure may have the above features and configuration. Hereinafter, the above features and configuration of the heating module will be described in more detail with reference to FIGS. 6 to 9.

For reference, thicknesses of components illustrated in FIGS. 6 and 7 are schematic representations for convenience of description and are not to scale, and the relative thickness differences between the components are also not related to actual dimensions.

FIGS. 6 and 7 are views for describing a relationship between thicknesses and skin depths of thin films. FIGS. 8 and 9 are views for describing changes in impedance between a thin film and a heated object depending on the type of the heated object.

For reference, the first heated thin-film coating TL1 and the second heated thin-film coating TL2 have the same technical characteristics. Hereinafter, for convenience of description, the first heated thin-film coating TL1 will be described as an example.

The characteristics of the first heated thin-film coating TL1 will be described as follows.

The first heated thin-film coating TL1 may be formed of a material having low magnetic permeability, the specific material thereof is as described above.

Specifically, the first heated thin-film coating TL1 may have the low magnetic permeability, and the skin depth of the first heated thin-film coating TL1 may be deep. Here, the skin depth refers to a depth to which current penetrates from a surface of a material, and the magnetic permeability may be inversely proportional to the skin depth. Accordingly, the lower the magnetic permeability of the first heated thin-film coating TL1, the deeper the skin depth of the first heated thin-film coating TL1.

In addition, the skin depth of the first heated thin-film coating TL1 may be deeper than a thickness thereof. That is, since the first heated thin-film coating TL1 is thin and has the skin depth deeper than the thickness, the magnetic field generated by the first working coil WC1 is transmitted to the heated object HO through the first heated thin-film coating TL1, thereby inducing eddy currents in the heated object HO.

That is, as illustrated in FIG. 6, when the skin depth of the first heated thin-film coating TL1 is shallower than the thickness of the first heated thin-film coating TL1, it can be seen that the magnetic field generated by the first working coil WC1 has difficulty reaching the heated object HO.

However, as in one embodiment of the present disclosure (i.e., as illustrated in FIG. 6), when the skin depth of the first heated thin-film coating TL1 is deeper than the thickness of the first heated thin-film coating TL1, it can be seen that most of the magnetic field generated by the first working coil WC1 is transmitted to the heated object HO. That is, in one embodiment of the present disclosure, since the skin depth of the first heated thin-film coating TL1 is deeper than the thickness of the first heated thin-film coating TL1, the magnetic field generated by the first working coil WC1 is mostly dissipated in the heated object HO through the first heated thin-film coating TL1, thereby primarily heating the heated object HO.

Meanwhile, the first heated thin-film coating TL1 is thin as described above and thus may have a resistance value capable of being heated by the first working coil WC1.

Specifically, the thickness of the first heated thin-film coating TL1 may be inversely proportional to the resistance value (i.e., a surface resistance value) of the first heating module HM1. That is, the thinner the first heated thin-film coating TL1, the higher the resistance value (i.e., the surface resistance) of the first heated thin-film coating TL1.

Since the first heated thin-film coating TL1 with these characteristics is present to heat a non-magnetic body, impedance characteristics between the first heated thin-film coating TL1 and the heated object HO may vary depending on whether the heated object HO disposed on the upper surface of the top plate 15 is a magnetic body or a non-magnetic body.

First, a case in which the heated object is a magnetic body will be described as follows.

Referring to FIGS. 3 and 8, when the magnetic heated object HO may be disposed on the upper surface of the top plate 15 and the first working coil WC1 is driven, a resistance component R1 and inductor component L1 of the magnetic heated object HO may form an equivalent circuit with a resistance component R2 and inductor component L2 of the first heating module HM1.

In this case, an impedance of the magnetic heated object in the equivalent circuit (i.e., an impedance composed of R1 and Ll) may be smaller than an impedance of the first heated thin-film coating TL1 (i.e., an impedance composed of R2 and L2).

Accordingly, when the equivalent circuit is formed, the amount of an eddy current I1 applied to the magnetic heated object HO may be greater than the amount of an eddy current I2 applied to the first heated thin-film coating TL1. More specifically, most of the eddy current is applied to the heated object HO to heat the heated object HO.

That is, when the heated object HO is a magnetic body, the equivalent circuit is formed and most of the eddy current is applied to the heated object HO, and thus the first working coil WC1 may directly heat the heated object HO.

Of course, since some eddy current may also be applied to the first heated thin-film coating TL1 to slightly heat the first heated thin-film coating TL1, the heated object HO may be slightly heated indirectly by the first heated thin-film coating TL1. However, compared to the degree to which the heated object HO is directly heated by the first working coil WC1, the degree to which the heated object HO is indirectly heated by the first heated thin-film coating TL1 is not significant.

On the other hand, a case in which the heated object is a non-magnetic body will be described as follows.

Referring to FIGS. 3 and 9, when the non-magnetic heated object HO is disposed on the upper surface of the top plate 15 and the first working coil WC1 is driven, the non-magnetic heated object HO has no impedance, and the first heated thin-film coating TL1 may have impedance. That is, a resistance component R and an inductance component L may be present only in the first heated thin-film coating TL1.

Accordingly, an eddy current I may be applied only to the first heated thin-film coating TL1, and no eddy current may be applied to the non-magnetic heated object HO. More specifically, the eddy current I may be applied only to the first heated thin-film coating TL1 to heat the first heated thin-film coating TL1.

That is, when the heated object HO is a non-magnetic body, as described above, the eddy current I may be applied to the first heated thin-film coating TL1 to heat the first heated thin-film coating TL1, and the non-magnetic heated object HO may be indirectly heated by the first heated thin-film coating TL1 heated by the first working coil WC1.

For reference, a protection temperature of the top plate 15 may be preset by top plate manufacturers or cooktop manufacturers. That is, when the top plate manufacturers provide information on a top plate lifetime by temperature to the cooktop manufacturers, the cooktop manufacturers may calculate a product lifetime in consideration of a cooktop usage time and set a protection temperature of the top plate 15.

In addition, a temperature sensor may be mounted in an area of the top plate 15 to detect temperature changes of the top plate 15 and provide the detected temperature information to the control module.

In summary, regardless of whether the heated object HO is a magnetic or non-magnetic body, the heated object HO may be heated directly or indirectly by a single heat source, that is, the first working coil WC1. That is, when the heated object HO is a magnetic body, the first working coil WC1 may directly heat the heated object HO, and when the heated object HO is a non-magnetic body, the first heated thin-film coating TL1 heated by the first working coil WC1 may indirectly heat the heated object HO.

As described above, the induction heating type cooktop 1 according to one embodiment of the present disclosure may heat both the magnetic and non-magnetic bodies, thereby heating the heated object regardless of the arrangement or type thereof. Accordingly, the user may place the heated object on any heating area on the top plate without determining whether the heated object is a magnetic or non-magnetic body, thereby improving user convenience.

In addition, the induction heating type cooktop 1 according to one embodiment of the present disclosure may directly or indirectly heat the heated object with the same heat source, eliminating the need for a separate heating plate or radiant heater. Accordingly, heating efficiency can be improved and material costs can be reduced.

Hereinafter, an induction heating type cooktop according to another embodiment of the present disclosure will be described.

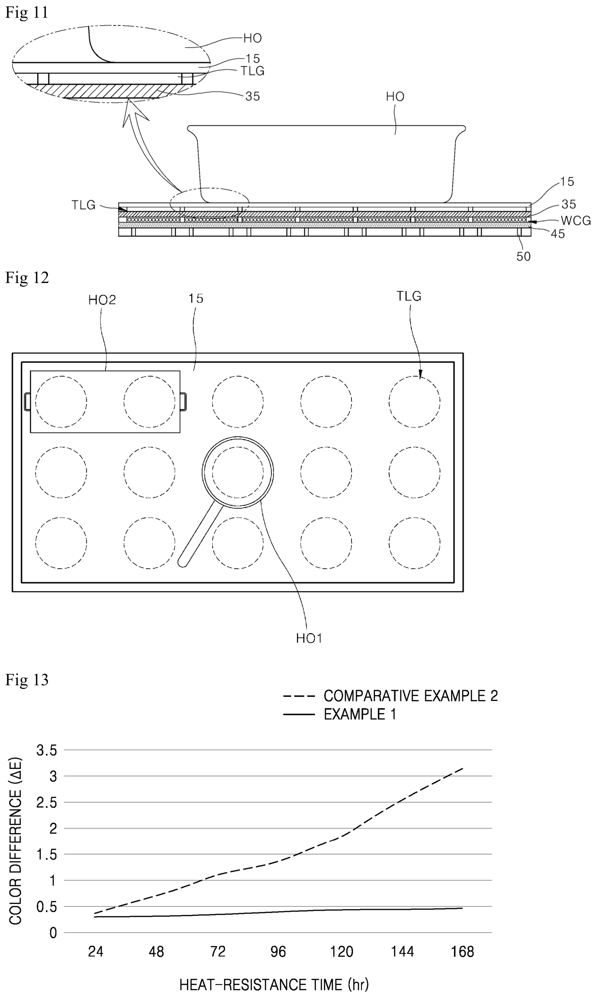

FIG. 10 is a view for describing an induction heating type cooktop according to another embodiment of the present disclosure. FIG. 11 is a view for describing components provided within a case of the induction heating type cooktop illustrated in FIG. 10. FIG. 12 is a view illustrating the arrangement of a heated object on the induction heating type cooktop illustrated in FIG. 10.

For reference, since an induction heating type cooktop 2 according to another embodiment of the present disclosure is the same as the induction heating type cooktop 1 in FIG. 1 except for some components and effects, differences will be primarily described.

Referring to FIGS. 10 and 11, the induction heating type cooktop 2 according to another embodiment of the present disclosure may be a zone-free cooktop, unlike the induction heating type cooktop 1 in FIG. 1.

Specifically, the induction heating type cooktop 2 may include the case 25, the cover plate 20, a plurality of heated thin-film coatings TLG, the thermal insulation material 35, a plurality of working coils WCG, the shield plate 45, the support member 50, the cooling fan (not illustrated), the spacer (not illustrated), and the control module (not illustrated).

Here, the plurality of heated thin-film coatings TLG and the plurality of working coils WCG may vertically overlap each other and may be disposed to correspond one-to-one to each other.

Of course, the plurality of heated thin-film coatings TLG and the plurality of working coils WCG may correspond to each other in a one-to-one manner, or in a many-to-one or one-to-many manner, but for convenience of description, in another embodiment of the present disclosure, an example in which the plurality of heated thin-film coatings TLG and the plurality of working coils WCG are disposed in a one-to-one manner.

The induction heating type cooktop 2 is a zone-free type cooktop including the plurality of heated thin-film coatings TLG and the plurality of working coils WCG. Accordingly, the cooktop 2 according to the present disclosure may simultaneously heat a single heated object HO using some or all of the plurality of working coils WCG or some or all of the plurality of heated thin-film coatings TLG. Of course, the heated object HO may also be heated using both some or all of the plurality of working coils WCG and some or all of the plurality of heated thin-film coatings TLG.

Accordingly, as illustrated in FIG. 10, in an area (e.g., an area of the top plate 15) in which the plurality of working coils WCG (see FIG. 8) and the plurality of heated thin-film coatings TLG are present, the heated objects HO1 and HO2 may be heated regardless of the size, position, or type of the heated objects HO1 and HO2.

### Examples

Hereinafter, the configuration and operation of the present disclosure will be described in more detail through exemplary embodiments of the present disclosure. However, this is suggested as exemplary examples of the present disclosure and may not be construed as limiting the present disclosure thereby in any sense.

Since contents not described herein may be technically inferred by those skilled in the art, a description thereof will be omitted.

### 1. Manufacturing of substrates for home appliances

Substrates formed of a ceramic glass material were prepared, and a color/adhesive layer and a protective layer were sequentially stacked on each of the substrates to form a color-coated stack. The thicknesses, compositions, and contents of the color/adhesive layer are shown in Table 1 below, and the thicknesses, compositions, and contents of the protective layer are shown in Table 2 below.

**[Table 1]**

| | glass frit (wt%) | | inorganic pigment (wt%) | | inorganic filler (wt%) | | average thickness |
|---|---|---|---|---|---|---|---|
| Comparative Example | A | 65 | B | 35 | - | | 3 |
| Example 1 | A | 58 | B | 30 | Nb₂O₅ | 12 | 10 |
| Example 2 | A | 60 | B | 30 | (Mg,Fe)₂Al₄Si₅O₁₈ | 10 | 15 |
| Example 3 | A | 52 | B | 30 | (Mg,Fe)₂Al₄Si₅O₁₈ | 18 | 50 |
| Example 4 | A | 44 | B | 31 | Li_{0.9}Al_{0.9}Si_{1.1}O₄ | 25 | 15 |
| Example 5 | A | 40 | B | 30 | Li_{0.9}Al_{0.9}Si_{1.1}O₄ | 30 | 50 |
| Example 6 | A | 34 | B | 28 | Li_{0.9}Al_{0.9}Si_{1.1}O₄ | 38 | 100 |
| Example 7 | A | 60 | B | 25 | Be₃Al₂Si₆O₁₈ | 15 | 5 |
| Example 8 | A | 52 | B | 32 | Al₂TiO₅ | 16 | 10 |
| Example 9 | A | 50 | B | 30 | LiAl(SiO₃)₂ | 20 | 15 |
| Example 10 | A | 36 | B | 29 | LiAl(SiO₃)₂ | 35 | 50 |
| Example 11 | A | 59 | B | 26 | Zr₂P₂O₉ | 15 | 10 |
| Example 12 | A | 58 | B | 31 | NaZr₂(PO₄)₃ | 11 | 15 |
| Example 13 | A | 48 | B | 30 | NaZr₂(PO₄)₃ | 22 | 50 |
| Example 14 | A | 55 | B | 33 | CaZr₄(PO₄)₆ | 12 | 10 |

**[Table 2]**

| | inorganic material (wt%) | | average thickness |
|---|---|---|---|
| Comparative | C | 100 | 15 |
| Example | | | |
| Example 1 | C | 100 | 15 |
| Example 2 | C | 100 | 15 |
| Example 3 | C | 100 | 15 |
| Example 4 | C | 100 | 15 |
| Example 5 | C | 100 | 15 |
| Example 6 | C | 100 | 15 |
| Example 7 | C | 100 | 15 |
| Example 8 | C | 100 | 15 |
| Example 9 | C | 100 | 15 |
| Example 10 | C | 100 | 15 |
| Example 11 | C | 100 | 15 |
| Example 12 | C | 100 | 15 |
| Example 13 | C | 100 | 15 |
| Example 14 | C | 100 | 15 |

| | | | |
|---|---|---|---|
| A: Glass frit having a composition of 73 wt% Bi₂O₃, 9 wt% B₂O₃, 6 wt% SiO₂, 5 wt% BaO, 5 wt% ZrO₂, and 2 wt% P₂O₅ B: Oxides of Fe, Ni, and Mo C: Inorganic material having a composition of 4 wt% V₂O₅, 11 wt% P₂O₅, 26 wt% B₂O₃, 18 wt% Bi₂O₃, 12 wt% ZnO, 14 wt% SiO₃, 12 wt% B₂O₃, and 3 wt% Al₂O₃ | | | |

The color-coated stack was formed using a screen printing method. A color/adhesive layer was formed by coating one surface of the substrate with a color/adhesive layer paste coating solution. The color/adhesive layer was formed by drying at 200 °C for 10 minutes and then firing at 700 °C for 20 minutes. Thereafter, the protective layer paste coating solution was coated onto the color/adhesive layer to form a protective layer. The protective layer was also formed through the same process as the color/adhesive layer.

### 2. Evaluation of physical properties of substrates for home appliances

### (1) Adhesion evaluation

For the substrates according to the examples and comparative examples, a tester (0.1 to 0.2 mm) was used to evaluate adhesion of coatings by bringing a scratching tape (11 horizontal lines, 11 vertical lines, 1 mm intervals) into complete contact with a scratched area, peeling the scratching tape off at a 45°, and visually inspecting its surface.
No surface defects: O
Minor surface defects: △
Severe surface defects: X

### (2) Thermal stability evaluation

For the substrates according to the examples and comparative examples, thermal stability was evaluated by comprehensively examine the surface condition, presence of peeling, and color difference ΔE=3 after leaving the substrates at 400 °C for 1 hour and then cooling the substrates to room temperature
No surface defects: O
Minor surface defects: △
Severe surface defects: X

### (3) Transmittance evaluation

For the substrates according to the examples and comparative examples, transmittance was evaluated by measuring the degree of light absorption by transmitting light through a coated film using a transmittance measuring device (LS116, Linshang).
x>0.02: Bottom transparency
0.01<x<0.02: Minor bottom transparency
x<0.01: No bottom transparency

### (4) Measurement results

The results of measuring the physical properties of the examples and comparative examples are shown in Table 3.

**[Table 3]**

| | Adhesion | Thermal stability | Transmittance |
|---|---|---|---|
| Comparative Example | Δ | X | - |
| Example 1 | O | O | 0.028 |
| Example 2 | O | O | 0.012 |
| Example 3 | Δ | Δ | 0.008 |
| Example 4 | O | O | 0.01 |
| Example 5 | O | O | 0.005 |
| Example 6 | O | O | 0 |
| Example 7 | Δ | Δ | 0.033 |
| Example 8 | O | O | 0.03 |
| Example 9 | O | O | 0.023 |
| Example 10 | Δ | Δ | 0.014 |
| Example 11 | Δ | Δ | 0.021 |
| Example 12 | O | O | 0.014 |
| Example 13 | Δ | Δ | 0.008 |
| Example 14 | Δ | Δ | 0.015 |

### Description of Reference Numerals

| | |
|---|---|
| **Description of Reference Numerals** | 25: case |
| 15: substrate for home appliances | TL1, TL2: first and second heated thin-film coating |
| 10: substrate | WC1, WC2: first and second working coils |
| 11: adhesive layer | 35: thermal insulation material |
| 12: color layer | 45: shield plate |
| 13: protective layer | 50: support member |
| 20: cover plate | 55: cooling fan |

## Claims

1. A substrate for home appliances, which has one surface coated with a color-coated stack,
wherein the color-coated stack includes:
a color/adhesive layer positioned in contact with a surface of the substrate; and
a protective layer positioned above the color layer.

2. The substrate of claim 1, wherein the color/adhesive layer is formed of a color/adhesive layer paste coating solution including glass frit, an inorganic pigment, and an inorganic filler.

3. The substrate of claim 2, wherein the color/adhesive layer paste coating solution includes:
the glass frit in an amount of 5 wt% to 70 wt%;
the inorganic pigment in an amount of 5 wt% to 70 wt%; and
the inorganic filler in an amount of 10 wt% to 60 wt%.

4. The substrate of claim 2 or 3, wherein the inorganic filler includes Li(1-x)Al(1-x)Si(1+x)O₄ (where x satisfies 0 ≤ x ≤ 0.42).

5. The substrate of claim 2, 3 or 4, wherein the inorganic pigment includes an oxide of one selected from Fe, Al, Mn, Ni, Ti, Mo, Si, Mg, Co, Sn, and Zr.

6. The substrate of any one of the claims 2- 5, wherein the glass frit has a coefficient of thermal expansion of 50 to 110 x10⁻⁷/°C and a softening point of 300 °C to 600 °C.

7. The substrate of any one of the preceding claims, wherein the protective layer is formed of a protective layer paste coating solution including an inorganic material.

8. The substrate of any one of the preceding claims, wherein the color/adhesive layer has a thickness of 5 µm to 150 µm, and
the protective layer has a thickness of 0.1 µm to 50 µm.

9. The substrate of any one of the preceding claims, wherein the substrate includes a ceramic glass material.

10. An induction heating type cooktop comprising:
a case;
a cover plate coupled to an upper end of the case and having a top plate in which a heated object is disposed on an upper surface thereof;
a working coil provided within the case to heat the heated object;
a thermal insulation material provided above the working coil; and
a heated thin-film coating provided on any one surface of the top plate or any one surface of the thermal insulation material and having a stacked structure in which an adhesive layer and a heating layer are sequentially stacked,
wherein the top plate employs the substrate of any one of the preceding claims.

11. The induction heating type cooktop of claim 10, wherein the heated thin-film coating further includes a protective layer stacked on one surface of the heating layer.

12. The induction heating type cooktop of claim 10 or 11, further comprising:
a shield plate mounted on a lower surface of the working coil to block a magnetic field generated downward when the working coil is driven;
a support member installed between the lower surface of the shield plate and a lower surface of the case to support the shield plate upward; and
a cooling fan installed inside the case to cool the working coil.

13. The induction heating type cooktop of claim 10, 11, or 12, wherein the support member includes an elastic body configured to support the shield plate upward.

14. The induction heating type cooktop of any one of the preceding claims 10-13, wherein the cooling fan suctions air outside the case and transfers the air to the working coil, or suctions air inside the case and discharges the air to the outside of the case, and
the thermal insulation material blocks heat generated when the heated object or the heated thin-film coating is heated by an operation of the working coil from being transferred to the working coil.
